# EUROPEAN PATENT SPECIFICATION

(11) **EP 0 552 513 B1**
(45) Date of publication and mention of the grant of the patent: **04.12.1996**
(21) Application number: 92204069.6
(22) Date of filing: 23.12.1992
(51) Int. Cl.: H01J 61/44, C09K 11/79, C09K 11/78

(54) **Low-pressure mercury discharge lamp**
Niederdruckquecksilberentladungslampe
Lampe à décharge dans la vapeur de mercure à basse pression

(30) Priority: 07.01.1992 EP 92200028
(43) Date of publication of application: 28.07.1993
(73) Proprietor: Philips Electronics N.V., 5621 BA Eindhoven (NL)
(72) Inventor: Van der Linden, G.H., c/o INT. OCTROOIBUREAU B.V., NL-5656 AA Eindhoven (NL); De Ridder, Adriaan J., c/o INT. OCTROOIBUREAU B.V., NL-5656 AA Eindhoven (NL); Smets, Bruno Maria J., c/o INT. OCTROOIBUREAU B.V., NL-5656 AA Eindhoven (NL)
(74) Representative: Evers, Johannes Hubertus Maria

(56) References cited:
- DE-A- 1 810 999
- US-A- 3 505 240
- US-A- 4 047 069
- US-A- 4 176 294
- US-A- 4 176 299

## Description

The invention relates to a low-pressure mercury discharge lamp having emission maxima in three spectral regions, provided with a gastight, radiation-transmitting discharge vessel with a gas filling comprising mercury and rare gas and provided with a luminescent layer which comprises at least a first luminescent material with an emission maximum in the 590-630 nm region and a second luminescent material with an emission maximum in the 520-565 nm region.

Low-pressure mercury discharge lamps with emission maxima in three spectral regions are known from US Patent 4,176,294 and Netherlands Patent 164,697. These low-pressure mercury discharge lamps are widely used for general lighting and have the advantage that they have a good general colour rendering (colour rendering index R(a,8) of at least 80) as well as a high luminous efficacy (up to values of 90 lm/W and higher). This is possible because the emission of these low-pressure mercury discharge lamps has maxima in three spectral regions. To achieve this, the low-pressure mercury discharge lamps comprise a first (red-)luminescing material with an emission maximum in the 590-630 nm region and a second (green-)luminescing material with an emission maximum in the 520-565 nm region. The required emission in the third spectral region, *i.e.* the 430-490 nm region, is supplied in many cases by a third (blue-)luminescing material. The visible radiation emitted by the mercury vapour discharge itself, however, also offers a contribution (*i.e.* the emission of the 436 nm mercury line) in this spectral region, so that the presence of a blue-luminescing material in the luminescent layer is not always necessary. The low-pressure mercury discharge lamps emit white light at a given colour temperature, *i.e.* the colour point (x, y in the CIE chromaticity diagram) of the emitted radiation is situated on or adjacent the Planckian locus. In addition to the requirements to be imposed on the luminescent layer as regards the properties mentioned above relating to the colour temperature of the light radiated by the low-pressure mercury discharge lamp, colour rendering and the luminous efficacy, it is also required that the luminescent layer should comprise substances which show a small short-term luminous decrement (*i.e*. the materials suffer no or only little damage owing to irradiation with short-wave ultraviolet radiation, especially 185 nm radiation), while degradation of the luminescent layer during lamp operation takes place so slowly that the life of the low-pressure mercury discharge lamp is scarcely affected thereby and the lamp characteristics related to the luminescent layer are not subject to major changes during lamp life. Because of these requirements to be imposed on the luminescent layer, there are only a limited number of luminescent materials which are suitable for use in this layer. This is especially true if the low-pressure mercury discharge lamp is highly loaded during lamp operation (the power consumed by the low-pressure mercury discharge lamp in the discharge column is more than 500 W per m² surface area of the luminescent layer). Green-luminescing materials which are frequently used in practice are terbium-activated cerium-magnesium aluminate (CAT) and cerium-magnesium pentaborate activated by gadolinium and terbium (CBT). These materials comply satisfactorily with the conflicting requirements listed above and are suitable for use in the luminescent layers of both low-load and high-load low-pressure mercury discharge lamps. A disadvantage, however, is that the cost price of these materials is comparatively high, so that the cost price of the luminescent layer and thus also the cost price of the low-pressure mercury discharge lamp are adversely affected.

The invention has for its object to provide a low-pressure mercury discharge lamp of the kind mentioned in the opening paragraph in which the luminescent layer has very favourable properties, while at the same time the cost price of the luminescent layer is comparatively low.

A low-pressure mercury discharge lamp according to the invention is for this purpose characterized in that the second luminescent material is defined by the formula

Sr_{(2-x-y)}BaₓSiO₄:Eu⁺² _{y},

in which 0,2 ≤ x ≤ 1,4 and 0,0005 ≤ y ≤ 0,05.

It was found that a low-pressure mercury discharge lamp according to the invention has favourable properties as regards the colour point of the light radiated by the low-pressure mercury discharge lamp, colour rendering, luminous efficacy, and the degradation of the luminescent layer both at high and at low loads. Furthermore, Sr_{(2-x-y)}BaₓSiO₄:Eu⁺²_{y} (in which 0,2 ≤ x ≤ 1,4 and 0,0005 ≤ y ≤ 0,05), referred to as BOSE hereinafter, is considerably cheaper than CAT or CBT. A further surprising advantage of the use of BOSE is that often the quantity of the first luminescent material in the luminescent layer may be chosen to be comparatively low without detracting from the favourable properties of the low-pressure mercury discharge lamp. Since in practice the first luminescent material is often the most expensive component of the luminescent layer, this means a further reduction of the cost price of the low-pressure mercury discharge lamp.

It should be noted that materials activated by bivalent europium and having a basic lattice Me₂SiO₄ (Me being Sr and/or Ba) as the luminescent material are known *per se* from US Patent 3,505,240. In this Patent, however, the use of such materials in the luminescent layer of a low-pressure mercury discharge lamp with emission maxima in three spectral regions is not mentioned. Both in Netherlands Patent 164,697 and in US Patent 4,176,294, both cited above, it is stated that low-pressure mercury discharge lamps with a high liminous efficacy have a good colour rendering only if there is no or very little overlap between the emission bands of the first, the second, and the third luminescent material. If BOSE is the second luminescent material, however, this condition is not satisfied, because especially for comparatively low values of x the emission of BOSE both in the 430-490 nm region and in the 590-630 nm region forms a comparatively large portion of the total emission band of BOSE. A considerable overlap between the emission bands of the luminescent materials is the result. Seen against this background, it is very surprising that the use of BOSE as a second luminescent material in the luminescent layer of a low-pressure mercury discharge lamp results in a good colour rendering, while a high luminous efficacy is maintained.

It was found that the wavelength λₘₐₓ at which maximum emission takes place is situated in the desired region if 0,2 ≤ x ≤ 1,4. It was found that the value of λₘₐₓ decreases from approximately 565 nm (for x = 0,2) to approximately 520 nm (for x = 1,4) with an increasing value of x.

When y has a value below 0,0005, the luminescent material has an insufficient absorption of the excitant radiation, so that too low luminous fluxes are obtained for practical applications. Values of y above 0,05 lead to concentration quenching to such an extent that also insufficient luminous fluxes are obtained. Such compositions of BOSE, accordingly, are not suitable for use in a low-pressure mercury discharge lamp according to the invention.

Besides the wavelength λₘₐₓ the half-value width of the emission curve (= the width at half the height of the emission curve) is dependent on x. The properties of the luminescent material are determined both by λₘₐₓ and by the half-value width of the emission peak. It was found that BOSE is very suitable for forming a luminescent layer with very good properties in combination with a red-luminescing material if x is chosen to lie between 0,35 and 0,60, so that a λₘₐₓ value of between 550 nm and 538 nm and a half-value width of the emission curve of between 109 nm and 94 nm are realised. The colour point of the light emitted by this luminescent layer may be adjusted so as to lie on or at only a very small distance from the Planckian locus in the IEC chromaticity diagram through a suitable choice of the mixing ratio. When a blue-luminescing material with a maximum emission in the 430-490 nm region is also included in the luminescent layer, it is possible to adjust the colour point of the light emitted by the luminescent layer over a favourable range in the IEC chromaticity diagram through the choice of the mixing ratio. More particularly, white light can be obtained over a wide range of colour temperatures. Lamps comprising BOSE, in which x lies in the 0,35 ≤ x ≤ 0,60 range, accordingly, are preferred.

A further preferred embodiment of a low-pressure mercury discharge lamp accordingly to the invention is characterized in that 0,01 ≤ y ≤ 0,03. A good quantum efficiency (number of photons of visible light radiated by a luminescent material per ultraviolet photon absorbed) is found for this Eu⁺² activator content in BOSE, also if the low-pressure mercury discharge lamp has a high load. When the activator content is increased, one of the effects is that the sensitivity of the luminescent material to oxidation increases strongly, which adversely affects the processability of the luminescent material.

It was found that the use of rare earth metal oxide activated by trivalent europium as the first luminescent material and/or the use of a material activated by bivalent europium as the third luminescent material in a low-pressure mercury discharge lamp according to the invention yield a comparatively high luminous efficacy and a very good colour rendering. This is true, for example, for the use of yttrium oxide activated by trivalent europium as the first luminescent material. Materials activated by bivalent europium with which good results are obtained are *inter alia* alkaline earth aluminates and alkaline earth-magnesium aluminates.

A special embodiment of a low-pressure mercury discharge lamp according to the invention is characterized in that the power consumed by the low-pressure mercury discharge lamp in the discharge column is more than 500 Watts per m² surface area of the luminescent layer. It was found, in fact, that BOSE is highly suitable for use in high-load lamps because of its small short-term luminous decrement and its small degradation.

The invention will be explained in more detail with reference to three Tables.

Table I shows the luminous efficacy (η) in lumens/Watt for three low-pressure mercury discharge lamps as a function of the number of burning hours. The rated power of the low-pressure mercury discharge lamps was 36 W and their internal diameter was approximately 24 mm. The luminescent layer of the low-pressure mercury discharge lamps comprises yttrium oxide activated by trivalent europium (YOX) as the first luminescent material and barium-magnesium aluminate activated by bivalent europium (BAM) as the third luminescent material. Sr_{1,58}Ba_{0,4}SiO₄:Eu⁺²_{0,02} is present in the luminescent layer of the first low-pressure mercury discharge lamp (according to the invention) as the second luminescent material. For comparison, the Table also lists data of a second and a third low-pressure mercury discharge lamp (both not according to the invention). The luminescent layer of the second low-pressure mercury discharge lamp comprises CAT and the luminescent layer of the third low-pressure mercury discharge lamp comprises CBT as the second luminescent material. The mixing ratios of the three components of the luminescent layers were so chosen that the colour temperature of the light radiated by the low-pressure mercury discharge lamps was approximately 4000 K. Except for the composition of the luminescent layer, the construction of the three low-pressure mercury discharge lamps was identical. It follows from Table I that the decrease in luminous efficacy of the low-pressure mercury discharge lamp according to the invention is only small and corresponds approximately to that of the second and the third low-pressure mercury discharge lamp, which proves that the degradation of a luminescent layer comprising Sr_{1,58}Ba_{0,4}SiO₄:Eu⁺²_{0,02} does not proceed any faster than the degradation of luminescent layers comprising the much more expensive materials CAT and CBT as the second luminescent material, such as in the second and the third low-pressure mercury discharge lamp, respectively. It is also evident from the Table that the quantity of YOX in the first low-pressure mercury discharge lamp is comparatively small. Since yttrium oxide is comparatively expensive, this means in practice that there is a further possibility of reducing the cost price of the low-pressure mercury discharge lamp.

Table II shows the luminous efficacy (η) and the colour rendering index (R(a,8)) of low-pressure mercury discharge lamps for a number of colour temperatures of the light radiated by the low-pressure mercury discharge lamp. The luminescent layer of each low-pressure mercury discharge lamp comprises YOX as the first luminescent material and BAM as the third luminescent material. The data listed in Table II were calculated for low-pressure mercury discharge lamps having a corresponding colour temperature in which the luminescent layer comprises CBT (for comparison, not according to the invention), Sr_{1,38}Ba_{0,6}SiO₄:Eu⁺²_{0,02} and Sr_{1,58}Ba_{0,4}SiO₄:Eu⁺²_{0,02} as the second luminescent material, respectively. It can be seen that, for a given colour temperature of the light radiated by the low-pressure mercury discharge lamp, both the luminous efficacies and the colour rendering indices of the various low-pressure mercury discharge lamps closely correspond. It is also evident that the properties of the low-pressure mercury discharge lamp whose luminescent layer comprises CBT are approximated most closely by the low-pressure mercury discharge lamp whose luminescent layer comprises Sr_{1,58}Ba_{0,4}SiO₄:Eu⁺²_{0,02}.

Table III shows the luminous efficacy (η) in lm/W of a high-load low-pressure mercury discharge lamp according to the invention as a function of the number of burning hours. The power consumed by the low-pressure mercury discharge lamp in the discharge column is approximately 800 W per m² surface area of the luminescent layer. The luminescent layer of the lamp comprises YOX as the first luminescent material, Sr_{1,58}Ba_{0,4}SiO₄:Eu⁺²_{0,02} as the second luminescent material, and BAM as the third luminescent layer. It can be seen that there is no measurable degradation of the luminescent layer after 100 burning hours.

**TABLE I**

| | η(lm/W) | | |
|---|---|---|---|
| Burning Hours | 0 h | 100 h | 500 h |
| | | | |

| Luminescent Layer | | | |
|---|---|---|---|
| | | | |
| 34% YOX, | | | |
| 13% BAM, | 89 | 86 | 84 |
| 53% Sr_{1,58}Ba_{0,4}SiO₄:Eu⁺²_{0,02} | | | |
| | | | |
| 61% YOX | | | |
| 9% BAM, | 89 | 85 | 84 |
| 30% CAT | | | |
| | | | |
| 55% YOX, | | | |
| 9% BAM, | 92 | 90 | 88 |
| 36% CBT | | | |

**TABLE II**

| | CBT | | Sr_{1,38}Ba_{0,6}SiO₄:Eu⁺²_{0,02} | | Sr_{1,58}Ba_{0,4}SiO₄:Eu⁺²_{0,02} | |
|---|---|---|---|---|---|---|
| | η | R(a,8) | η | R(a,8) | η | R(a,8) |
| Colour Temperature | | | | | | |
| 2700 K | 92 | 84 | 90 | 88 | 91 | 83 |
| 3000 K | 91 | 85 | 89 | 88 | 90 | 84 |
| 4000 K | 91 | 83 | 88 | 92 | 90 | 83 |
| 5000 K | 89 | 82 | 86 | 92 | 87 | 83 |
| 6500 K | 88 | 79 | 84 | 90 | 86 | 82 |

**TABLE III**

| | η (lm/W) | |
|---|---|---|
| Burning Hours | 0 h | 100 h |

| Luminescent Layer | | |
|---|---|---|
| 53 % YOX | | |
| 41 % BOSE | 53 | 53 |
| 6 % BAM | | |

## Claims

1. A low-pressure mercury discharge lamp having emission maxima in three spectral regions, provided with a gastight, radiation-transmitting discharge vessel with a gas filling comprising mercury and rare gas and provided with a luminescent layer which comprises at least a first luminescent material with an emission maximum in the 590-630 nm region and a second luminescent material with an emission maximum in the 520-565 nm region, characterized in that the second luminescent material is defined by the formula
Sr_{(2-x-y)}BaₓSiO₄:Eu⁺² _{y},
in which 0,2 ≤ x ≤ 1,4 and 0,0005 ≤ y ≤ 0,05.

2. A low-pressure mercury discharge lamp as claimed in Claim 1, characterized in that 0,35 ≤ x ≤ 0,60.

3. A low-pressure mercury discharge lamp as claimed in Claim 1 or 2, characterized in that 0,01 ≤ y ≤ 0,03.

4. A low-pressure mercury discharge lamp as claimed in Claim 1, 2 or 3, characterized in that the luminescent layer comprises a third luminescent material having a maximum emission in the 430-490 nm region.

5. A low-pressure mercury discharge lamp as claimed in any one of the preceding Claims, characterized in that the first luminescent material is a rare earth metal oxide activated by trivalent europium.

6. A low-pressure mercury discharge lamp as claimed in Claim 4 or 5, characterized in that the third luminescent material is activated by bivalent europium.

7. A low-pressure mercury discharge lamp as claimed in any one of the preceding Claims, characterized in that the power consumed by the low-pressure mercury discharge lamp in the discharge column is more than 500 Watts per m² surface area of the luminescent layer.

## Patentansprüche

1. Niederdruck-Quecksilberentladungslampe mit Emissionsmaxima in drei Spektralbereichen, die mit einem gasdichten, strahlungsdurchlässigen Entladungsgefäß mit einer Quecksilber und Edelgas enthaltenden Gasfüllung versehen ist und mit einer Leuchtschicht, die zumindest einen ersten Leuchtstoff mit einem Emissionsmaximum im Bereich 590-630 nm und einen zweiten Leuchtstoff mit einem Emissionsmaximum im Bereich 520-565 nm umfaßt, dadurch gekennzeichnet, daß der zweite Leuchtstoff durch die Formel
Sr_{(2-x-y)}BaₓSiO₄:Eu⁺² _{y},
definiert wird, mit 0,2 ≤ x ≤ 1,4 und 0,0005 ≤ y ≤ 0,05.

2. Niederdruck-Quecksilberentladungslampe nach Anspruch 1, dadurch gekennzeichnet, daß 0,35 ≤ x ≤ 0,60.

3. Niederdruck-Quecksilberentladungslampe nach Anspruch 1 oder 2, dadurch gekennzeichnet, daß 0,01 ≤ y ≤ 0,03.

4. Niederdruck-Quecksilberentladungslampe nach Anspruch 1, 2 oder 3, dadurch gekennzeichnet, daß die Leuchtschicht einen dritten Leuchtstoff mit einer maximalen Emission im Bereich 430-490 nm umfaßt.

5. Niederdruck-Quecksilberentladungslampe nach einem der vorhergehenden Ansprüche, dadurch gekennzeichnet, daß der erste Leuchtstoff ein mit dreiwertigem Europium aktiviertes Seltenerdmetalloxid ist.

6. Niederdruck-Quecksilberentladungslampe nach Anspruch 4 oder 5, dadurch gekennzeichnet, daß der dritte Leuchtstoff mit zweiwertigem Europium aktiviert wird.

7. Niederdruck-Quecksilberentladungslampe nach einem der vorhergehenden Ansprüche, dadurch gekennzeichnet, daß die von der Niederdruck-Quecksilberentladungslampe in der Entladungssäule aufgenommene Leistung mehr als 500 Watt pro m² Oberfläche der Leuchtschicht beträgt.

## Revendications

1. Lampe à décharge dans la vapeur de mercure à basse pression présentant des maximums d'émission dans trois régions spectrales, et munie d'un récipient à décharge étanche au gaz et transmettant le rayonnement avec un remplissage de gaz comportant du mercure et du gaz rare, et munie d'une couche luminescente qui comporte au moins un premier matériau luminescent présentant un maximum d'émission dans la région comprise entre 590 et 630 nm, et un deuxième matériau luminescent présentant un maximum d'émission dans la région comprise entre 520 et 565 nm, caractérisée en ce que le deuxième matériau luminescent est défini par la formule
Sr_{(2-x-y)}BaₓSiO₄:Eu⁺² _{y},
dans laquelle 0,2 ≤ x ≤ 1,4 et 0,0005 ≤ y ≤ 0,05.

2. Lampe à décharge dans la vapeur de mercure à basse pression selon la revendication 1, caractérisée en ce que 0,35 ≤ x ≤ 0,60.

3. Lampe à décharge dans la vapeur de mercure à basse pression selon la revendication 1 ou 2, caractérisée en ce que 0,01 ≤ y ≤ 0,03.

4. Lampe à décharge dans la vapeur de mercure à basse pression selon la revendication 1, 2 ou 3, caractérisée en ce que la couche luminescente comporte un troisième matériau luminescent présentant un maximum d'émission dans la région comprise entre 430 et 490 nm.

5. Lampe à décharge dans la vapeur de mercure à basse pression selon l'une quelconque des revendications précédentes, caractérisée en ce que le premier matériau luminescent est un oxyde métallique de terre rare activé par de l'europium trivalent.

6. Lampe à décharge dans la vapeur de mercure à basse pression selon la revendication 4 ou 5, caractérisée en ce que le troisième matériau luminescent est activé par de l'europium bivalent.

7. Lampe à décharge dans la vapeur de mercure à basse pression selon l'une quelconque des revendications précédentes, caractérisée en ce que la puissance consommée par la lampe à décharge dans la vapeur de mercure à basse pression dans la colonne à décharge est supérieure à 500 Watt par m² de zone superficielle de la couche luminescente.
